# EUROPEAN PATENT APPLICATION

(11) **EP 4 703 117 A1**
(43) Date of publication of application: **04.03.2026**
(21) Application number: 25192905.5
(22) Date of filing: 30.07.2025
(51) Int. Cl.: B29C 44/04, B29C 44/06, B29C 44/12, B29C 33/12, B29C 45/14, B29C 45/16, B29C 33/40, B29K 105/04, B29L 31/50

(54) **MOLDING DEVICE AND MOLDING METHOD**

(30) Priority: 25.08.2024 US 202463686854 P; 06.05.2025 US 202519200646
(71) Applicant: King Steel Machinery Co., Ltd., Taichung City 407 (TW)
(72) Inventor: CHEN, Ching-Hao, Taichung City 407, Taiwan, R.O.C. (TW); LEE, Yi-Chung, Taichung City 407, Taiwan, R.O.C. (TW)
(74) Representative: Michalski Hüttermann & Partner Patentanwälte mbB

(57) **Abstract**

A molding device includes a first mold, a second mold including a base portion and a peripheral portion disposed around or over the base portion, a mold cavity defined by the first mold and the second mold, and a first carrier disposed within the mold cavity and is attachable to and detachable from the base portion or the peripheral portion of the second mold.

## Description

### CROSS-REFERENCE TO RELATED APPLICATION

The present application claims priority to U.S. Patent Application No. 19/200,646, filed on May 6, 2025 and U.S. Provisional Patent Application No. 63/686,854, filed on August 25, 2024, which is incorporated by reference herein in their entirety.

### TECHNICAL FIELD

The present invention is related to a molding device, an injection molding system and a molding method, and, in particular, to a molding device, an injection molding system and a molding method for forming an article including more than one portion having different physical or functional properties.

### BACKGROUND

Foamed polymeric material has many advantages, such as high strength, low weight, impact resistance, thermal insulation, and others. Foamed articles can be made by injection molding or extrusion molding. For example, after a polymeric material is melted and mixed with a blowing agent to form a mixture, a force or pressure is applied to the mixture to inject or extrude the mixture into a cavity of a mold, and the mixture is foamed and cooled in the cavity to form the foamed article.

However, it is necessary to improve the properties of the foamed article made by the injection molding system, such as causing different portions of the foamed article to have different properties. Therefore, there is a need for improvements to structures of the molding device, the injection molding system and the method for making foamed articles.

### BRIEF SUMMARY OF THE INVENTION

One purpose of the present invention is to provide a molding device, an injection molding system and an injection molding method.

According to one embodiment of the present disclosure, a molding device is provided. The molding device includes a first mold, a second mold including a base portion and a peripheral portion disposed around or over the base portion, a mold cavity defined by the first mold and the second mold, and a first carrier disposed within the mold cavity and is attachable to and detachable from the base portion or the peripheral portion of the second mold.

According to one embodiment of the present disclosure, a molding method is provided. The molding method includes: providing a molding device including a first mold, a second mold having a base portion and a peripheral portion disposed around or over the base portion and a third mold; providing a first carrier attachable to and detachable from the base portion or the peripheral portion; disposing a first layer on the first carrier, the first layer includes a first polymeric material; engaging the first carrier with the second mold; engaging the first mold with the second mold to form a first mold cavity, wherein the first carrier and the first layer hold by the first carrier are disposed within the first mold cavity; injecting a second polymeric material from a injecting unit into the first mold cavity to form a second layer and an article including the first layer and the second layer from the second polymeric material; and removing the article from the molding device.

### BRIEF DESCRIPTION OF THE DRAWINGS

Aspects of the present disclosure are best understood from the following detail ed description when read with the accompanying figures. It should be noted that, in accordance with the standard practice in the industry, various features are not drawn to scale. In fact, the dimensions of the various features may be arbitrarily increased or reduced for clarity of discussion.
FIG. 1 is a schematic perspective view of a molding device in accordance with some embodiments of the present disclosure.
FIG. 2 is a schematic perspective view of a molding device in accordance with some embodiments of the present disclosure.
FIG. 3 is a schematic top view of a portion of a molding device in accordance with some embodiments of the present disclosure.
FIG. 4 is a schematic cross-sectional view of a portion of a molding device in accordance with some embodiments of the present disclosure.
FIG. 5 is a schematic perspective view of a portion of a molding device in accordance with some embodiments of the present disclosure.
FIG. 6 is a schematic perspective view of a portion of a molding device in accordance with some embodiments of the present disclosure.
FIG. 7 is a schematic perspective view of a portion of a molding device in accordance with some embodiments of the present disclosure.
FIG. 8 is a schematic perspective view of a portion of a molding device in accordance with some embodiments of the present disclosure.
FIG. 9 is a schematic top view of a portion of a molding device in accordance with some embodiments of the present disclosure.
FIG. 10 is a schematic cross-sectional view of a portion of a molding device in accordance with some embodiments of the present disclosure.
FIG. 11 is a schematic perspective view of an injection molding system in accordance with some embodiments of the present disclosure.
FIG. 12 is a schematic perspective view of a molding device in accordance with some embodiments of the present disclosure.
FIG. 13 is a flowchart showing a molding method in accordance with some embodiments of the present disclosure.
FIGS. 14 and 16-22 are schematic perspective views of an injection molding system used in a molding method in accordance with some embodiments of the present disclosure.
FIG. 15 is a schematic perspective view of a portion of an injection molding system used in a molding method in accordance with some embodiments of the present disclosure.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. Other than in the operating/working examples, or unless otherwise expressly specified, all of the numerical ranges, amounts, values and percentages, such as those for quantities of materials, durations of times, temperatures, operating conditions, ratios of amounts, and the likes thereof disclosed herein, should be understood as modified in all instances by the term "about." Accordingly, unless indicated to the contrary, the numerical parameters set forth in the present disclosure and the attached claims are approximations that can vary as desired. At the very least, each numerical parameter should be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

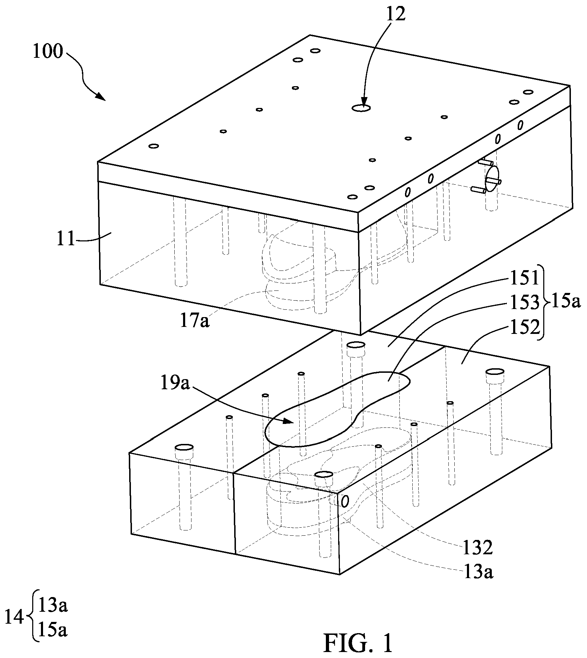

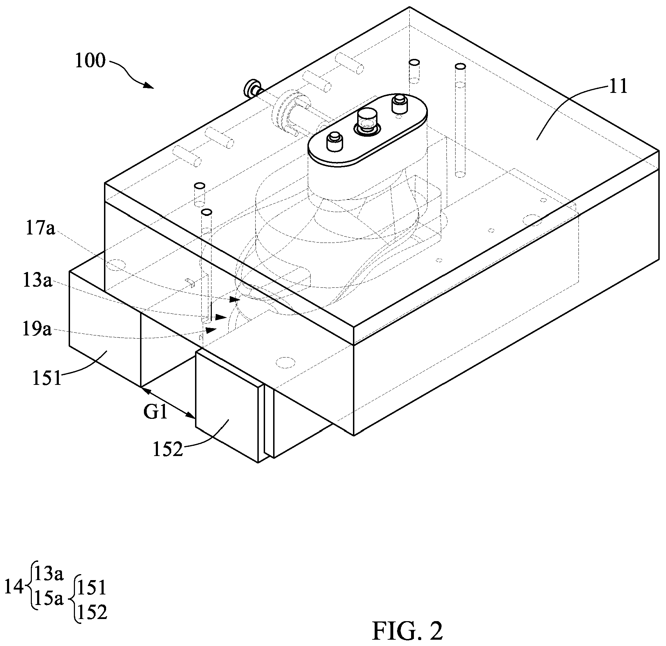

FIG. 1 is a schematic perspective view of a molding device 100 in accordance with some embodiments of the present disclosure in an opened configuration, and FIG. 2 is a schematic perspective view of the molding device 100 in another opened configuration.

In some embodiments, referring to FIGS. 1 and 2, the molding device 100 includes a first mold 11, a second mold 14, a first mold cavity 19a defined by the first mold 11 and the second mold 14, and a first carrier 132 disposed within the first mold cavity 19a. In some embodiments, the first mold 11 serves as an upper mold, and the second mold 14 serves as a lower mold. In some embodiments, the second mold 14 includes a first base portion 13a and a first peripheral portion 15a disposed around or over the first base portion 13a. In some embodiments, the second mold 14 is movable relative to the first mold 11. In some embodiments, the first carrier 132 is configured to hold a first layer M1 and is attachable to and detachable from the first base portion 13a or the first peripheral portion 15a of the second mold 14.

In some embodiments, the first mold 11, the first base portion 13a and the first peripheral portion 15a define the first mold cavity 19a. In some embodiments, the first mold 11 corresponds to the second mold 14 in some configurations such as dimension, shape or the like. The first mold 11 can be placed on and engaged with the first peripheral portion 15a. In some embodiments, the provision of the molding device 100 includes conveying the first base portion 13a and the first peripheral portion 15a toward the first mold 11, and subsequently disposing the first mold 11 over the first peripheral portion 15a. In some embodiments, the provision of the molding device 100 includes conveying the first mold 11 toward the second mold 14, and subsequently disposing the second mold 14 under the first mold 11. In some embodiments, the first mold 11 is aligned with the first base portion 13a. In some embodiments as shown in FIGS. 1 and 2, the molding device 100 is in an open configuration. In some embodiments, the first mold 11 is disposed over, moveable relative to and engageable with the first peripheral portion 15a, and the first peripheral portion 15a is disposed over, moveable relative to and engageable with the first base portion 13a.

In some embodiments, the first mold cavity 19a for forming an article (not shown) is defined by the first mold 11 and the second mold 14 when the first mold 11 is disposed opposite to the second mold 14. In some embodiments, the first peripheral portion 15a of the second mold 14 is disposed between the first mold 11 and the first base portion 13a.

In some embodiments, the molding device 100 further includes a third mold 17a attached to the first mold 11. In some embodiments, the first mold cavity 19a is defined by the first mold 11 the second mold 14 and the third mold 17a when the first mold 11 is disposed opposite to the second mold 14 and the third mold 17a is surrounded by the second mold 14. In some embodiments, the third mold 17a includes a shoe last.

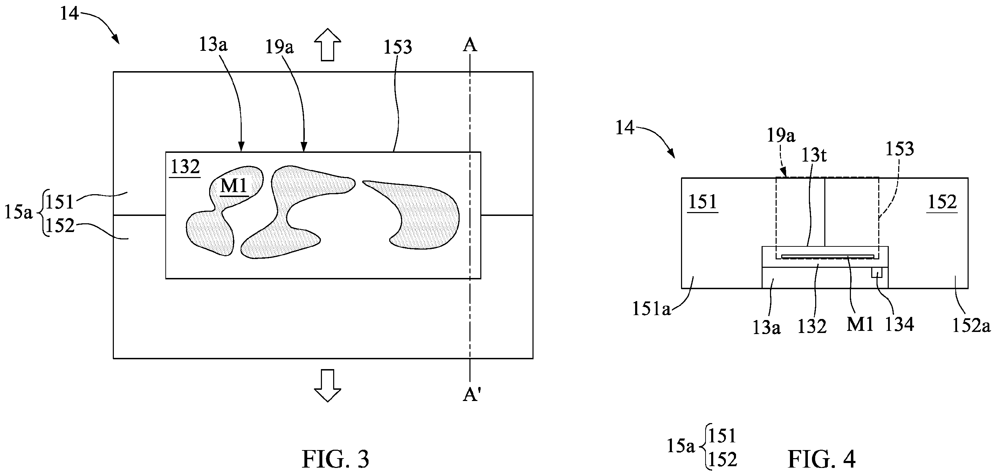

FIG. 3 is a schematic top view of a portion of the molding device 100 in a closed configuration. FIG. 4 is a cross-sectional view of the portion of the molding device 100 along line A-A' in FIG. 3. In some embodiments, referring to FIG. 3 and 4, the first peripheral portion 15a of the second mold 14 includes a first portion 151 and a second portion 152 adjacent to and engageable with each other, and the first base portion 13a is disposed between the first portion 151 and the second portion 152. In some embodiments, the first portion 151 and the second portion 152 are movably and detachably from each other. The first portion 151 and the second portion 152 are movable toward or away from each other. In some embodiments, an extending part 151a of the first portion 151 and an extending part 152a of the second portion 152 surround the first base portion 13a and the first carrier 132. In some embodiments, the first layer M1 held by the first carrier 132 is disposed between the first portion 151 and the second portion 152.

The first base portion 13a is stationary relative to the first portion 151 and the second portion 152. In some embodiments, the first portion 151 and the second portion 152 are attached to and engaged with each other to seal the first mold cavity 19a when the molding device 100 is in the closed configuration. In some embodiments, the first portion 151 and the second portion 152 are attached to and engaged with the first base portion 13a and the first carrier 132 when the molding device 100 is in the closed configuration.

In some embodiments, the first portion 151 and the second portion 152 are separated from each other when the molding device 100 is in the opened configuration (as shown in FIG. 2) and the first mold 11 is further moved away from the second mold 14 (as shown in FIG. 1), and an article (not shown) formed in the first mold cavity 19a and having the first layer M1 disposed thereon may be easily removed from the first mold cavity 19a. In some embodiments, referring back to FIG. 2, the first portion 151 is moved away or slide away from the second portion 152 to expand the first mold cavity 19a. In some embodiments, the first mold cavity 19a is expanded when the molding device 100 is in the open configuration. In some embodiments, a first gap G1 is formed between the first portion 151 and the second portion 152 when the molding device 100 is in the open configuration.

In some embodiments, the first carrier 132 is attachable to and detachable from the first base portion 13a. The first carrier 132 attached to the first base portion 13a is configured to hold the first layer M1 and attach the first layer M1 to a bottom surface of the article, or to form a pattern on the bottom surface of the article. In some embodiments, the first peripheral portion 15a has an inner sidewall 153. In some embodiments, the first mold cavity 19a is defined by the first mold 11, the inner sidewall 153 of the first peripheral portion 15a and the first carrier 132, and the first layer M1 is disposed in the first mold cavity 19a. Alternatively, the first carrier 132 may attach to any suitable positions in the first mold cavity 19a. In some embodiments, the first carrier 132 is attached to the inner sidewall 153 of the first peripheral portion 15a. The first carrier 132 is attached to the inner sidewall 153 is configured to hold the first layer M1 and attach the first layer M1 to a sidewall of the article, or to form a pattern on the sidewall of the article. In some embodiments, the first carrier 132 is attaches to the first mold 11 is configured to hold the first layer M1 and attach the first layer M1 to a top surface of the article (not shown), or to form a pattern on the top surface on the article.

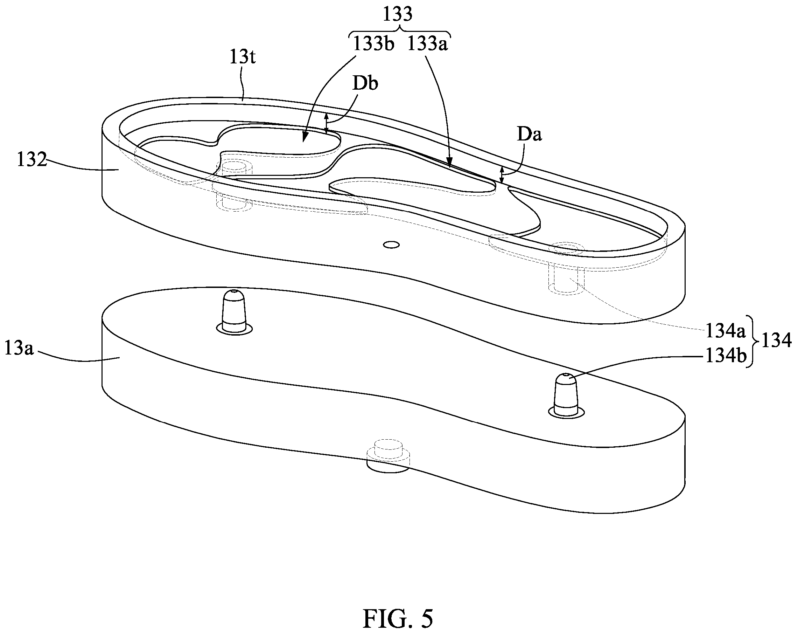

FIG. 5 is an enlarged schematic perspective view of a portion of the molding device 100 in accordance with some embodiments of the present disclosure. In some embodiments, referring to FIG. 5, the first carrier 132 is disposed on the first base portion 13a. In some embodiments, the first carrier 132 includes a recess 133 configured to hold the first layer M1. In some embodiments, the first layer M1 can be temporarily held by the recess 133. In some embodiments, the first carrier 132 is manufactured by 3D printing. In some embodiments, the first carrier 132 includes metal, polymer or any suitable material.

In some embodiments, the recess 133 includes a first recess 133a and a second recess 133b within the first recess 133a. The first recess 133a and a second recess 133b are concaved from a top surface 13t of the first carrier 132. In some embodiments, a depth Db of the second recess 133b is greater than a depth Da of the first recess 133a. In some embodiments, the first mold cavity 19a is defined by the first mold 11, the first peripheral portion 15a, the first recess 133a, and the first layer M1 disposed with the second recess 133b. In some embodiments, the second recess 133b is used to prevent movement of the first layer M1 during the injection of the fluid or the liquid into the first mold cavity 19a. The second recess 133b can be disposed at any suitable position on the top surface 13t of the first carrier 132. In some embodiments, configuration of the second recess 133b corresponds to configuration of the first layer M1. The second recess 133b is conformal to and the first layer M1. In some embodiments, the first layer M1 is disposed on the first carrier 132 and within the second recess 133b. In some embodiments, the first layer M1 and second recess 133b can be temporarily engage with each other. In some embodiments, the first layer M1 is temporarily fixed within the second recess 133b, and is removable or detachable from the second recess 133b and the first carrier 132.

In some embodiments, the molding device 100 further includes a locking device 134. In some embodiments, the locking device 134 is configured to lock the first carrier 132 on the second mold 14. In some embodiments, the locking device 134 allows a temporarily engagement of the first carrier 132 with the first base portion 13a or the first peripheral portion 15a. In some embodiments, the locking device 134 is used to prevent movement of the first carrier 132 during the injection of the fluid or the liquid into the first mold cavity 19a. The locking device 134 can be disposed at any suitable position between the first carrier 132 and the second mold 14.

In some embodiments, the locking device 134 includes a first locking element 134a disposed on the first carrier 132 and a second locking element 134b disposed on the second mold 14 and corresponding to the first locking element 134a. In some embodiments, the second locking element 134b is disposed on the first base portion 13a. In some embodiments, the first locking element 134a is disposed on a bottom surface of the first carrier 132. In some embodiments, the first locking elements 134a and the second locking element 134b can be clamped to or engage with each other, but the disclosure is not limited thereto. In some embodiments, the first locking element 134a is overlapped with the second locking element 134b when the first locking elements 134a and the second locking element 134b are clamped to or engaged with each other.

In some embodiments, the first locking element 134a is a part of the first carrier 132, while the second locking element 134b is a part of the second mold 14. In some embodiments, the second locking element 134b protrudes from the first base portion 13a, and the first locking element 134a is configured to receive the second locking element 134b. In some embodiments, the second locking element 134b protrudes from the first peripheral portion 15a. In some embodiments, the first locking element 134a protrudes from the first carrier 132, and the second locking element 134b is configured to receive the first locking element 134a. The position and number of the first locking element 134a may be adjusted according to requirements, and are not particularly limited. The position and number of the second locking element 134b may also be adjusted according to requirements, and are not particularly limited. In some embodiments, the position and number of the second locking element 134b correspond to the position and number of the first locking element 134a.

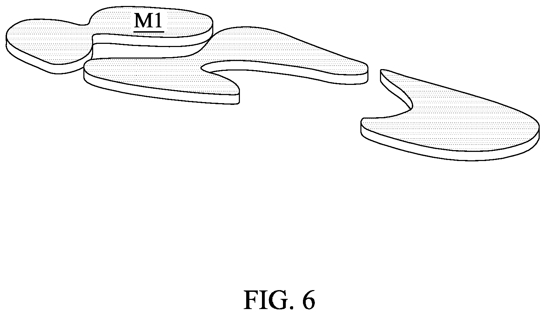

FIG. 6 is a schematic perspective view of a first layer M1 in accordance with some embodiments of the present disclosure. In some embodiments, referring to FIG .6, the first layer M1 includes a first polymeric material. The first layer M1 is configured to form a part of the article (not shown). In some embodiments, the first polymeric material includes rubber. In some embodiments, the first polymeric material includes thermoplastic polyurethane (TPU), polyurethane (PU), plastics or any other suitable materials. In some embodiments, the first polymeric material includes a physical blowing agent such as supercritical fluid. In some embodiments, the physical blowing agent is gaseous nitrogen, carbon dioxide, etc. In some embodiments, the first polymeric material is foamable, non-foamable or slightly foamable. In some embodiments, the first polymeric material includes a first dye. In some embodiments, the first layer M1 is wear-resistant. In some embodiments, the first layer M1 includes a plurality of segments. The segments may include same or different materials. In some embodiments, the first layer M1 is manufactured by 3D printing.

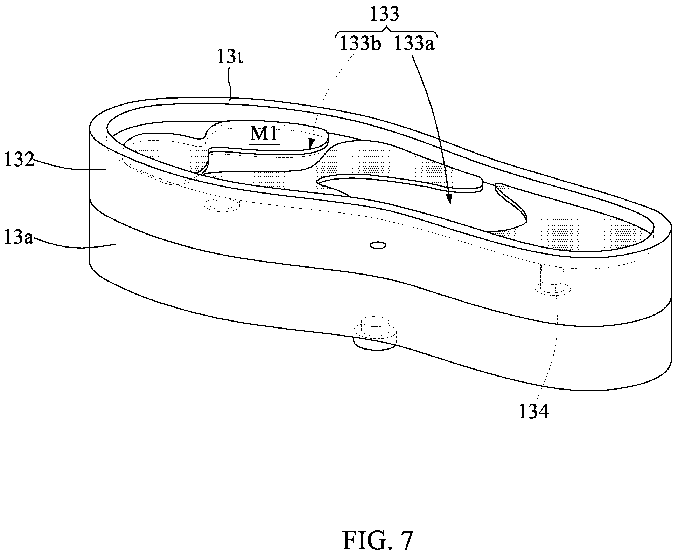

FIG. 7 is a schematic perspective view of a portion of the molding device 100 in accordance with some embodiments of the present disclosure. In some embodiments, referring to FIG. 7, the first layer M1 is disposed on the first carrier 132, and the first carrier 132 carries the first layer M1 and engages with the first base portion 13a. In some embodiments, the first layer M1 is disposed within the second recess 133b and surrounded by the first recess 133a. In some embodiments, the first layer M1 is formed, and then disposed on the first carrier 132 and within the recess 133. In some embodiments, the first base portion 13a and the first carrier 132 are engaged with each other by the locking device 134.

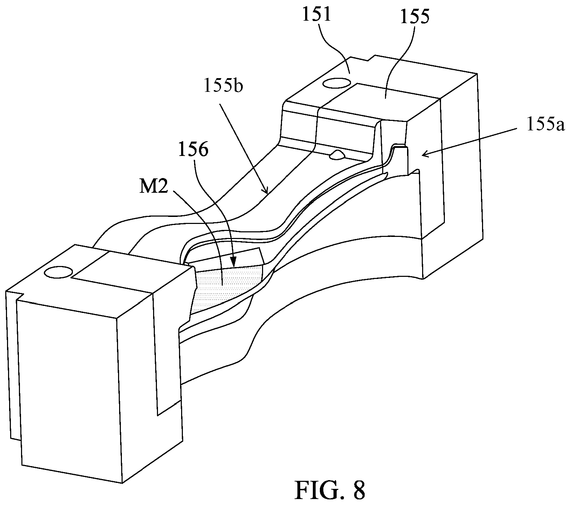

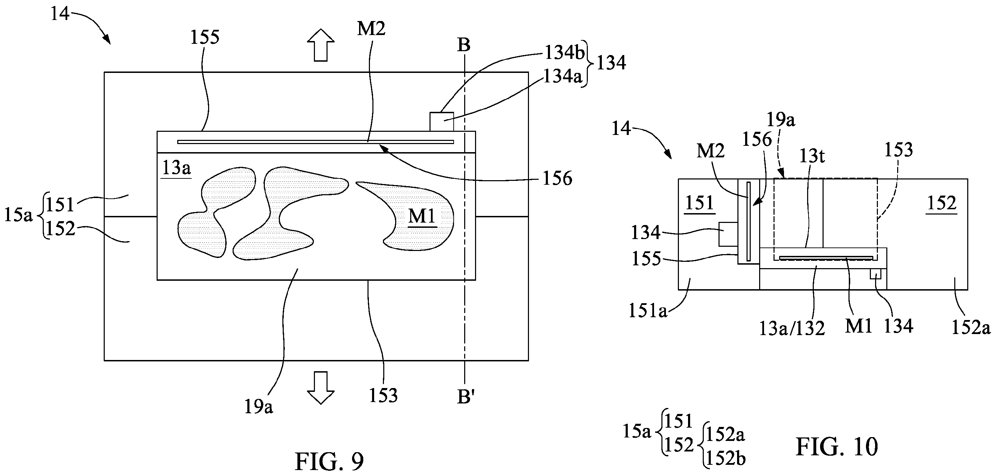

In some embodiments, a plurality of carriers such as the first carrier 132 may dispose in the first mold cavity 19a. FIG. 8 is a schematic perspective view of a portion of the molding device 100 in accordance with some embodiments of the present disclosure. FIG. 9 is a schematic top view of a portion of the molding device 100 in a closed configuration. FIG. 10 is a cross-sectional view of the portion of the molding device 100 along line B-B' in FIG. 9. In some embodiments, referring to FIGS. 8 to 10, the molding device 100 further includes a second carrier 155 disposed in the first mold cavity 19a. In some embodiments, the extending part 151a of the first portion 151 and the extending part 152a of the second portion 152 surround the first base portion 13a and the first carrier 132, and the second carrier 155 configured to hold a second layer M2 is disposed within the first mold cavity 19a. In some embodiments, the second carrier 155 configured to hold the second layer M2 is attached to and engaged with the first peripheral portion 15a. In some embodiments, the second carrier 155 attaches to the inner sidewall 153 and is configured to hold the second layer M2. The second layer M2 hold by the second carrier 155 is configured to attach the second layer M2 to the sidewall of the article, or to form a pattern on the sidewall of the article. In some embodiments, the first layer M1 and the second layer M2 have same or different patterns or configurations, as such the pattern on the sidewall of the article formed by the second layer M2 and the pattern on the bottom surface of the article formed by the first layer M1 may be same or different. In some embodiments, the second carrier 155 is disposed adjacent to the first carrier 132. In some embodiments, the second carrier 155 is manufactured by 3D printing. In some embodiments, the second layer M2 is manufactured by 3D printing.

In some embodiments, the second carrier 155 is attached to and engaged with the one of the first portion 151 and the second portion 152, and disposed between the first base portion 13a and the fist mold 11. In some embodiments, the second carrier 155 is attached to and engaged with the first portion 151, the second carrier 155 includes a recess 156 facing the second portion 152, and the second layer M2 is disposed in the recess 156. In some embodiments, the second carrier 155 is attached to and engaged with the second portion 152, and the recess 156 faces the first portion 151. In some embodiments, the second carrier 155 is embedded in one of the first portion 151 and the second portion 152 of the second mold 14. In some embodiments, as shown in FIG. 8, the second carrier 155 includes a first side 155a and a second side 155b opposite to the first side, the first side 155a is exposed, and the second side 155b is attached to one of the first portion 151 and the second portion 152 of the second mold 14.

In some embodiments, the second carrier 155 is similar to the first carrier 132 shown in FIGS. 5 and 7, and detailed descriptions of such operation are omitted for brevity. In some embodiments, the second layer M2 is similar to the first layer M1 shown in FIGS. 6 and 7, and detailed descriptions of such operation are omitted for brevity. In some embodiments, the first layer M1 and the second layer M2 include same or different material. In some embodiments, the first carrier 132 and the first layer M1 is omitted.

In some embodiments, the second layer M2 includes a second polymeric material. In some embodiments, the second polymeric material includes a second dye. In some embodiments, the second polymeric material includes rubber. In some embodiments, the second polymeric material includes TPU, PU, plastics or any other suitable materials. In some embodiments, the second polymeric material includes a physical blowing agent such as supercritical fluid. In some embodiments, the physical blowing agent is gaseous nitrogen, carbon dioxide, etc. In some embodiments, the second polymeric material is foamable, non-foamable or slightly foamable. In some embodiments, the second layer M2 is wear-resistant. In some embodiments, the second layer M2 includes a plurality of segments. The segments may include same or different materials. In some embodiments, the second layer M2 is manufactured by 3D printing.

In some embodiments, the molding device 100 includes a plurality of locking devices 134. In some embodiments, the locking device 134 is configured to lock the second carrier 155 on the first peripheral portion 15a. In some embodiments, the locking device 134 allows a temporarily engagement of the second carrier 155 with the first peripheral portion 15a. In some embodiments, the locking device 134 is used to prevent movement of the second carrier 155 during the injection of the fluid or the liquid into the first mold cavity 19a. The locking device 134 can be disposed at any suitable position between the second carrier 155 and the first peripheral portion 15a.

In some embodiments, the locking device 134 includes the first locking element 134a disposed on the second carrier 155 and the second locking element 134b disposed on the first peripheral portion 15a and corresponding to the first locking element 134a. In some embodiments, the first locking element 134a is disposed on a bottom surface of the second carrier 155. In some embodiments, the first locking element 134a is a part of the second carrier 155, while the second locking element 134b is a part of the first peripheral portion 15a. In some embodiments, the second locking element 134b protrudes from the first peripheral portion 15a, and the first locking element 134a is configured to receive the second locking element 134b. In some embodiments, the first locking element 134a protrudes from the second carrier 155, and the second locking element 134b is configured to receive the first locking element 134a.

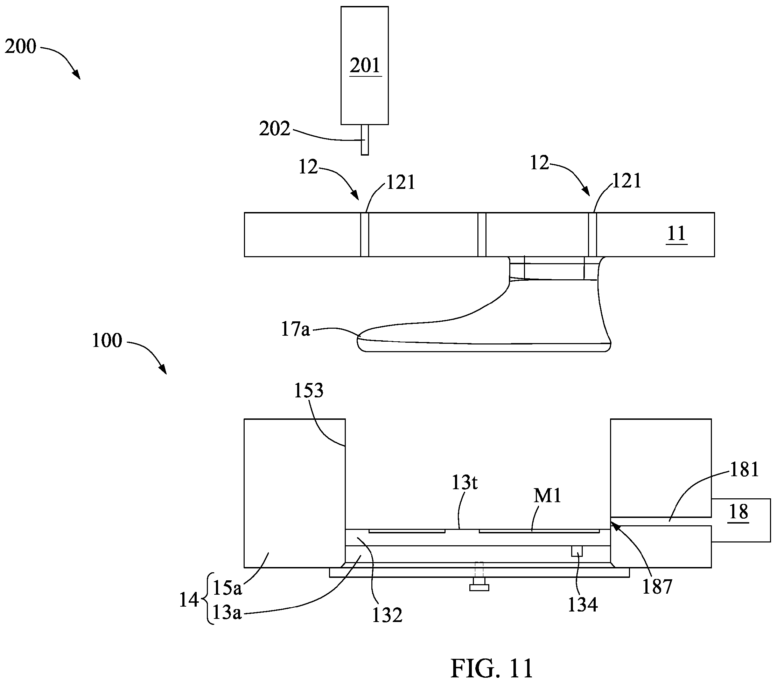

FIG. 11 is a schematic perspective views of an injection molding system 200 in accordance with some embodiments of the present disclosure. In some embodiments, the injection molding system 200 is configured to form the article (not shown) and includes the molding device 100, a mixing unit 201 and an injection unit 202.

In some embodiments, the injection unit 202 is coupled to the mixing unit 201. In some embodiments, the molding device100 includes a feeding port 12 extended through the first mold 11 and configured to couple to the injection unit 202. In some embodiments, the first mold 11 includes the feeding port 12 communicable with the first mold cavity 19a. The feeding port 12 has an opening 121 disposed on the first mold 11.

In some embodiments, the first mold cavity 19a is accessible through a plurality of feeding ports 12. For simplicity and clarity, two feeding ports 12 in communicated with the first mold cavity 19a are illustrated, however, it can be understood that any suitable numbers of the feeding ports 12 can be configured at the first mold 11. In some embodiments, the second mold 14 includes the feeding port 12. In some embodiments, the first peripheral portion 15a or the first base portion 13a includes the feeding port 12.

In some embodiments, the molding device 100 further includes one or more pressure-regulating systems 18. In some embodiments, the pressure-regulating systems 18 attaches to the second mold 14. In some embodiments, the pressure-regulating systems 18 attaches to the first peripheral portion 15a or the first base portion 13a. In some embodiments, when the first mold 11 is disposed opposite to the second mold 14, the pressure-regulating systems 18 including a gas conduit 181 and a junction point 187 in connection with the first mold cavity 19a and the gas conduit 181.

In some embodiments, one end of the first gas conduit 181 is coupled to the junction point 187, and the other end of the first gas conduit 181 is coupled to a gas controller 183. In some embodiments, the gas controller 183 is configured to supply or exit a fluid or gas, in which a suitable fluid or gas may be supplied or exit depending on the needs; for example, the fluid or gas may be air, inert gas, etc., but the present disclosure is not limited thereto.

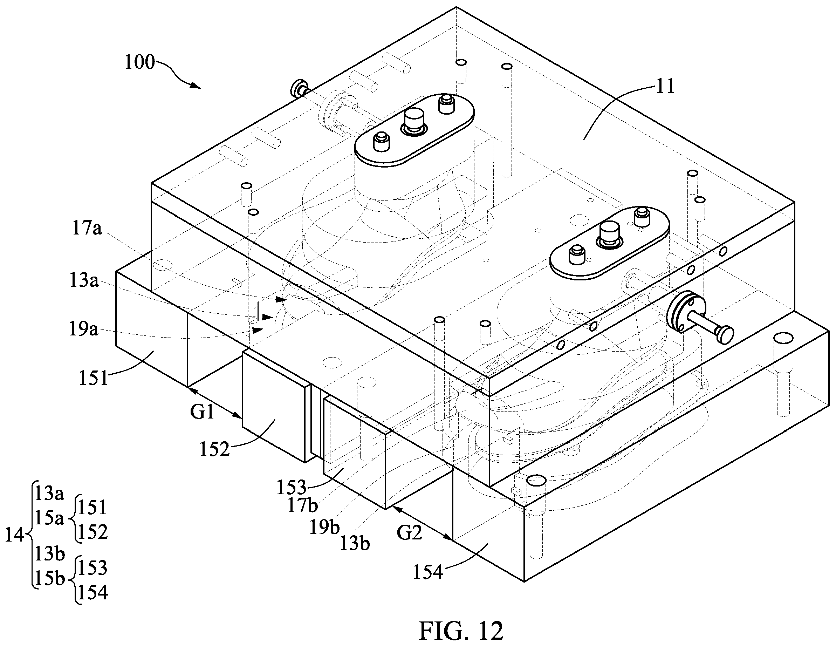

FIG. 12 is a schematic perspective view of a molding device in accordance with some embodiments of the present disclosure. In some embodiments, referring to FIG. 12, the second mold 14 further includes a second base portion 13b and a second peripheral portion 15b. In some embodiments, the first mold 11 is disposed over, moveable relative to and engageable with the second peripheral portion 15b, and the second peripheral portion 15b is disposed over, moveable relative to and engageable with the second base portion 13b. In some embodiments, a second mold cavity 19b for forming an article (not shown) is defined by the first mold 11, the second base portion 13b and the second peripheral portion 15b when the first mold 11 is disposed opposite to the second peripheral portion 15b. In some embodiments, the molding device 100 includes the first mold cavity 19a and the second mold cavity 19b.

In some embodiments, the third mold 17a and a fifth mold 17b are attached to the first mold 11. The third mold 17a is configured to define the first mold cavity 19a together with the first mold 11 and the first peripheral portion 15a and the first base portion 13a, and the fifth mold 17b is configured to define the second mold cavity 19b together with the first mold 11, the second peripheral portion 15b and the second base portion 13b. In some embodiments, the fifth mold 17b is shoe lasts. In some embodiments, the second base portion 13b, the second peripheral portion 15b, the second mold cavity 19b and the fifth mold 17b is omitted.

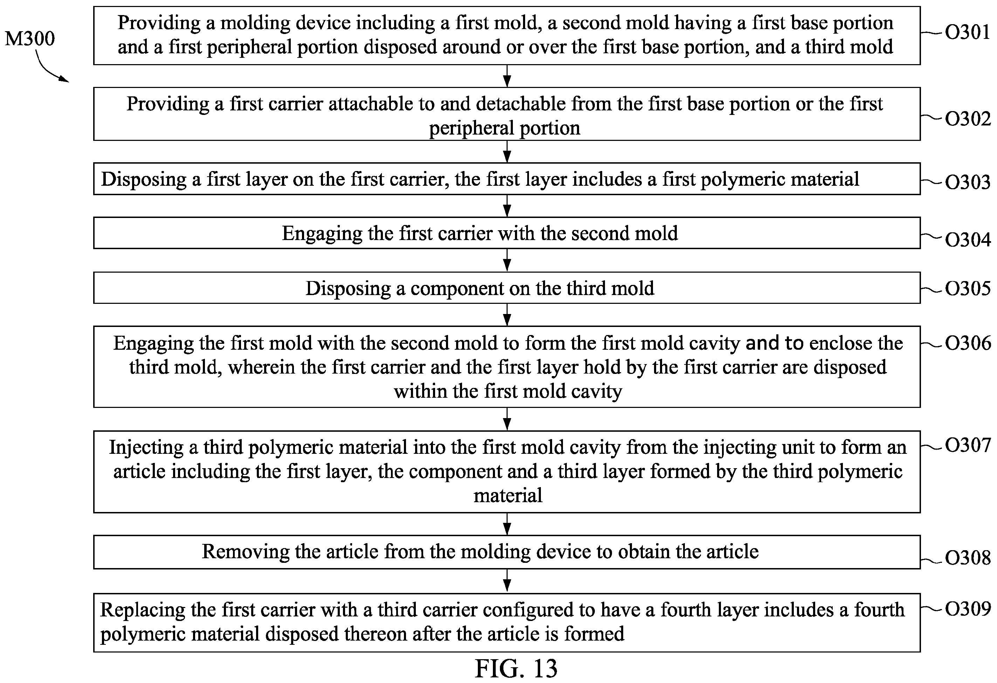

In the present disclosure, an injection molding method M300 is disclosed. FIG. 13 is a flowchart showing a method M300 of injection molding method in accordance with some embodiments of the present disclosure. The method M300 includes several operations: (0301) providing a molding device including a first mold, a second mold having a first base portion and a first peripheral portion disposed around or over the first base portion, and a third mold; (O302) providing a first carrier attachable to and detachable from the first base portion or the first peripheral portion; (O303) disposing a first layer on the first carrier, the first layer includes a first polymeric material; (O304) engaging the first carrier with the second mold; (O305) disposing a component on the third mold; (O306) engaging the first mold with the second mold to form the first mold cavity and to enclose the third mold, wherein the first carrier and the first layer hold by the first carrier is disposed within the first mold cavity; (O307) injecting a third polymeric material into the first mold cavity from the injecting unit to form an article including the first layer, the component and a third layer formed by the third polymeric material; (O308) removing the article from the molding device to obtain the article; and (O309) replacing the first carrier with a third carrier configured to have a fourth layer includes a fourth polymeric material disposed thereon after the article is formed.

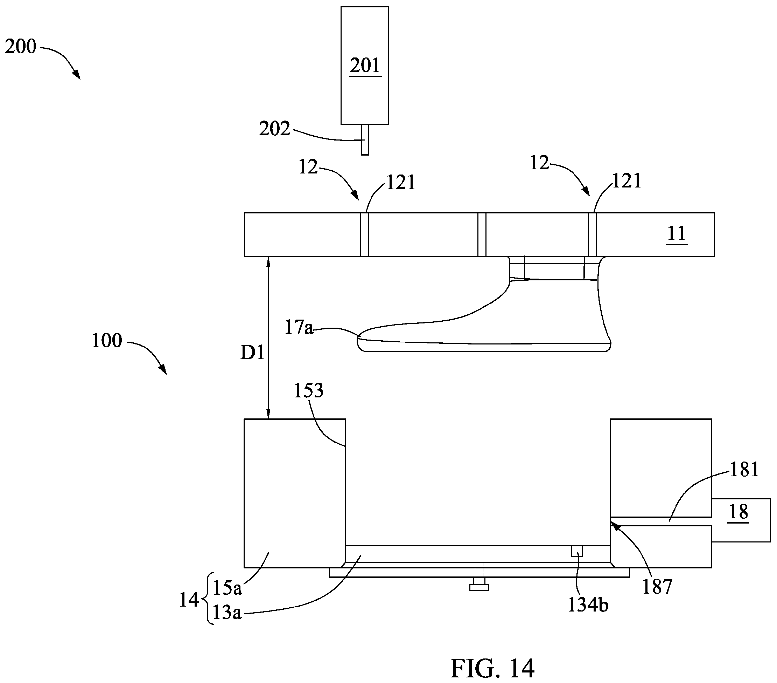

The method includes a number of operations and the description and illustration are not deemed as a limitation to the sequence of operations. FIGS. 14 to 22 are schematic perspective views of one or more operations of the molding method M300 in accordance with some embodiments of the present disclosure. The injection molding method M300 is implemented by an injection molding system 200 (shown in FIG. 11) including a molding device100 (shown in FIGS. 1 and 2). FIGS. 5 and 7 are schematic perspective views of a first carrier 132 of a molding device 100 in accordance with some embodiments of the present disclosure.

The method M300 begin with operation 0301. Operation 0301 includes providing a molding device including a first mold, a second mold having a first base portion and a first peripheral portion disposed around or over the first base portion, and a third mold. In some embodiments, referring to FIG. 14, the injection molding method M300 includes operation 0301, which includes providing a molding device 100 including a first mold 11, a second mold 14 having a first base portion 13a and a first peripheral portion 15a disposed around or over the first base portion 13a, and a third mold 17a. In some embodiments, the injection molding method M300 includes providing a mixing unit 201 and an injection unit 202 over the molding device 100.

In some embodiments, the molding device 100 is provided or received as shown in FIGS. 5 and 7. In some embodiments, the molding device 100 is configured to forming an article. In some embodiments, the molding device 100 including a pressure-regulating system 18 having a junction point 187, a gas conduit 181 and a pressure sensing unit (not shown) is provided or received.

In some embodiments, during the operation 0301, the molding device 100 is in an opened configuration. In some embodiments, during operation 0301, the first mold 11 and the second mold 14 are separated from each other. In some embodiments, the first mold 11 is moved vertically to a first position above the second mold 14. At the first position, the first mold 11 is aligned with the second mold 14 of the molding device 100. In some embodiments, a first distance D1 between the first mold 11 and the second mold 14 is greater than 0.

The method M300 continues with operations O302 and O303. Operation O302 includes providing a first carrier attachable to and detachable from the first base portion or the first peripheral portion. Operation O303 includes disposing a first layer on the first carrier, the first layer includes a first polymeric material.

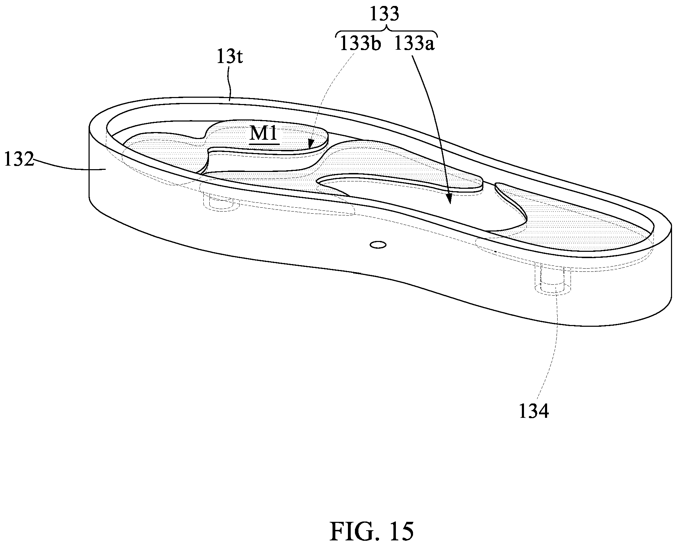

In operations O302, referring to FIG. 15, a first carrier 132 attachable to and detachable from the first base portion 13a or the first peripheral portion 15a is provided. In operations O303, a first layer M1 configured to dispose on the first carrier 132 is provided. The first layer M1 is configured to form a part of the article (not shown). In some embodiments, the first layer M1 includes a first polymeric material. In some embodiments, the first layer M1 is manufactured by 3D printing. In some embodiments, the first carrier 132 is manufactured by 3D printing.

In some embodiments, the first carrier 132 holds the first layer M1. In some embodiments, the first layer M1 is temporarily held by a recess 133 of the first carrier 132. In some embodiments, the first layer M1 is disposed with in the recess 133. In some embodiments, the recess 133 includes a first recess 133a and a second recess 133b within the first recess 133a, and the first layer M1 is held by the first carrier 132 and disposed within the second recess 133b corresponding to the configuration of the first layer M1. In some embodiments, the first layer M1 and second recess 133b are temporarily engage with each other. In some embodiments, the first layer M1 is temporarily fixed within the second recess 133b, and is removable or detachable from the second recess 133b and the first carrier 132.

The method M300 continues with operation O304. Operation O304 includes engaging the first carrier with the second mold.

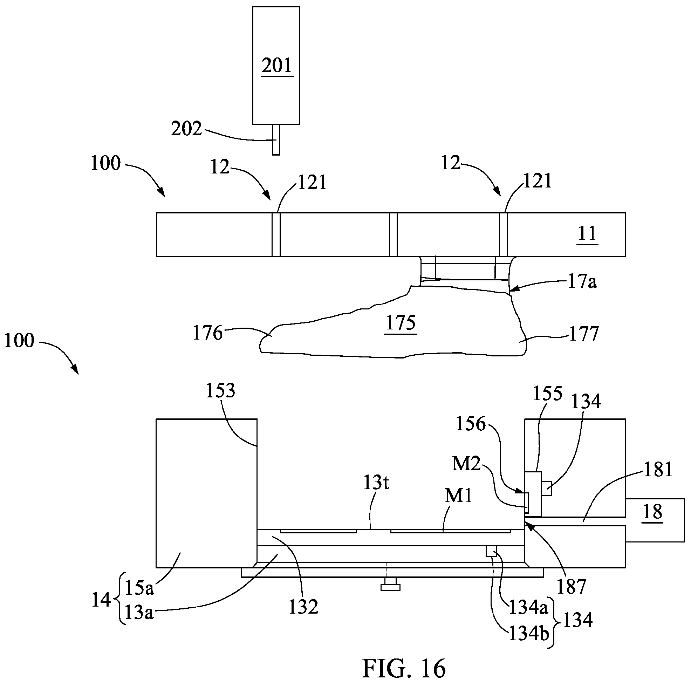

In some embodiments, referring to FIG. 16, operation O304 includes engaging the first base portion 13a and the first carrier 132 with each other. In some embodiment, the first layer M1 is disposed on the first carrier 132 before the engagement of the first base portion 13a and the first carrier 132. In some embodiments, after disposing the first layer M1 on the first carrier 132 and within the recess 133, the first carrier 132 holding the first layer M1 is engaged with the first base portion 13a. In some embodiment, the first layer M1 is disposed on the first carrier 132 after the engagement of the first base portion 13a and the first carrier 132.

In some embodiments, the first carrier 132 holding the first layer M1 is placed on the first base portion 13a when the molding device 100 is in the open configuration as shown in FIG. 16. In some embodiments, the first layer M1 is placed on the first carrier 132 when the molding device 100 is in the open configuration as shown in FIG. 16. In some embodiments, the first base portion 13a and first carrier 132 are surrounded by the first peripheral portion 15a.

In some embodiments, referring to FIG. 16, operation O304 includes engaging the first carrier 132 and the second mold 14 by a locking device 134 between the first carrier 132 and the second mold 14. In some embodiments, the locking device 134 prevents movement of the first carrier 132 when the first carrier 132 is disposed within the molding device 100. In some embodiments, the locking device 134 between the first carrier 132 and the second mold 14 temporarily engages the first carrier 132 with the second mold 14. In some embodiments, the locking device 134 between the first carrier 132 and the first base portion 13a temporarily engages the first carrier 132 with the first base portion 13a.

In some embodiments, the locking device 134 includes a first locking element 134a disposed on the first carrier 132 and a second locking element 134b disposed on the second mold 14 and corresponding to the first locking element 134a. In some embodiments, operation O304 includes clamping or engaging the first locking element 134a and the second locking element 134b with each other, but the disclosure is not limited thereto.

In some embodiments, the second locking element 134b protrudes from the first base portion 13a, and the first locking element 134a receives the second locking element 134b while the first locking element 134a and the second locking element 134b are engage with each other. In some embodiments, the first locking element 134a protrudes from the first carrier 132, and the second locking element 134b receives the first locking element 134a while the first locking element 134a and the second locking element 134b are engage with each other.

In some embodiments, the method M300 further includes providing a second carrier 155, and disposing a second layer M2 on the second carrier 155, wherein the second layer M2 includes a second polymeric material.

In some embodiments, the method M300 further includes engaging the second carrier 155 with the second mold 14. In some embodiments, the method M300 further includes attaching the first carrier 132 having the first layer M1 disposed thereon to the first base portion 13a, and attaching the second carrier 155 having the second layer M2 disposed thereon to the first peripheral portion 15a.

In some embodiments, the first peripheral portion 15a and the second carrier 155 are engaged with each other. In some embodiment, the second layer M2 is disposed on the second carrier 155 before the engagement of the first peripheral portion 15a and the second carrier 155. In some embodiments, after disposing the second layer M2 on the second carrier 155 and within the recess 156, the second carrier 155 holding the second layer M2 is engaged with the first peripheral portion 15a. In some embodiment, the second layer M2 is disposed on the second carrier 155 after the engagement of the first peripheral portion 15a and the second carrier 155.

In some embodiments, the second carrier 155 holding the second layer M2 is placed on the first peripheral portion 15a when the molding device 100 is in the open configuration as shown in FIG. 16. In some embodiments, the second layer M2 is placed on the second carrier 155 when the molding device 100 is in the open configuration.

In some embodiments, the method M300 further includes engaging the second carrier 155 and the second mold 14 by the locking device 134 between the second carrier 155 and the second mold 14. In some embodiments, the locking device 134 prevents movement of the second carrier 155 when the second carrier 155 is disposed within the molding device 100. In some embodiments, the locking device 134 between the second carrier 155 and the second mold 14 temporarily engages the second carrier 155 with the second mold 14. In some embodiments, the locking device 134 between the second carrier 155 and the first peripheral portion 15a temporarily engages the second carrier 155 with the first peripheral portion 15a.

In some embodiments, the locking device 134 includes the first locking element 134a disposed on the second carrier 155 and the second locking element 134b disposed on the second mold 14 and corresponding to the first locking element 134a. In some embodiments, the method M300 includes clamping or engaging the first locking element 134a disposed on the second carrier 155 and the second locking element 134b with each other.

In some embodiments, the second locking element 134b protrudes from the first peripheral portion 15a, and the first locking element 134a receives the second locking element 134b while the first locking element 134a and the second locking element 134b are engage with each other. In some embodiments, the first locking element 134a protrudes from the second carrier 155, and the second locking element 134b receives the first locking element 134a while the first locking element 134a and the second locking element 134b are engage with each other.

In some embodiments, the first carrier 132 and the first layer M1 are omitted, only the second carrier 155 holding the second layer M2 is attached to the second mold 14. In some embodiments, the second carrier 155 and the second layer M2 are omitted, only the first carrier 132 holding the first layer M1 is attached to the second mold 14. In some embodiments, the second carrier 155 and the second layer M2 are omitted, and the first carrier 132 having the first layer M1 attaches to the first peripheral portion 15a.

The method M300 continues with operation O305. Operation O305 includes disposing a component on the third mold.

In some embodiments, referring to FIG. 16, a component 175 attaches to the third mold 17a. In some embodiments, the component 175 is put on the third mold 17a. In some embodiments, the component 175 is conformal to the third mold 17a. In some embodiments, the component 175 includes a polymeric material. In some embodiments, the component 175 is permeable to gas or fluid (such as air, supercritical fluid, inert gas, nitrogen, carbon dioxide, etc.). In some embodiments, the component 175 includes a fabric. In some embodiments, the component 175 is an insole, a footwear upper or any other suitable component of the footwear.

In some embodiments, a barrier layer (not shown) is disposed between the component 175 and the third mold 17a. In some embodiments, the barrier layer (not shown) is attached to an inner surface of the component 175 before putting the component 175 on the third mold 17a. The inner surface of the component 175 and the barrier layer (not shown) are disposed over the third mold 17a after putting the component 175 on the third mold 17a. In some embodiments, the barrier layer (not shown) is conformal to the component 175. In some embodiments, the barrier layer (not shown) is a TPU film.

In some embodiments, the third mold 17a and the component 175 are moved to a predetermined position above the first layer M1 as shown in FIG. 16, and then the first mold 11a, the third mold 17a and the component 175 are moved toward the first layer M1. In some embodiments, the molding device 100 is disposed under the mixing unit 201 and the injection unit 202. In some embodiments, the injection molding method M300 further includes disposing a component (not shown) on the fifth mold 17b shown in FIG. 12 attached to the first mold 11.

The method M300 continues with operation O306. Operation O306 includes engaging the first mold with the second mold to form the first mold cavity and to enclose the third mold, wherein the first carrier and the first layer hold by the first carrier are disposed within the first mold cavity.

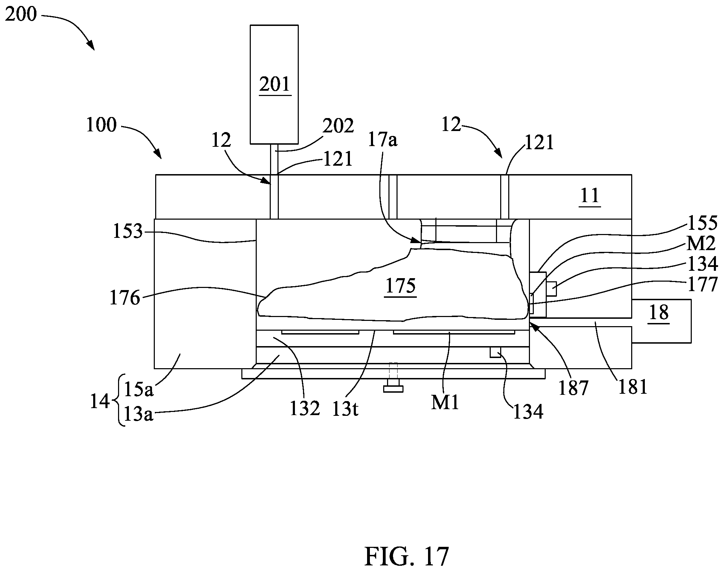

In some embodiments, referring to FIG. 17, the first mold 11 is engaged with the second mold 14, the first mold cavity 19a is formed, and the third mold 17a and the first layer M1 carried by the first carrier 132 are disposed within the first mold cavity 19a. In some embodiments, the second layer M2 is carried by the second carrier 155 and disposed within the first mold cavity 19a. In some embodiments, the molding device 100 including the first mold cavity 19a is in the closed configuration.

In some embodiments, when the molding device 100 is in the closed configuration and the first mold 11 is disposed opposite to the second mold 14, and the first mold cavity 19a is defined by the first mold 11, the first peripheral portion 15a, the third mold 17a, the first base portion 13a, the first carrier 132, the second carrier 155, the component 175, the first layer M1, and the second layer M2. In some embodiments, the third mold 17a, the component 175, the first layer M1 and the second layer M2 are surrounded by the first mold 11, the second mold 14, the first carrier 132, and the second carrier 155.

In some embodiments, the component 175, the first layer M1 and the second layer M2 are disposed between the first mold 11 and the second mold 14. In some embodiments, the component 175, the first layer M1 and the second layer M2 are disposed within the first mold cavity 19a. In some embodiments, the component 175 surrounds the third mold 17, over the first layer M1 and adjacent to the second layer M2. In some embodiments, the component 175, the first layer M1 and the second layer M2 are surrounded by the second mold 14.

In some embodiments, two ends 176, 177 of the components 175 attach the first peripheral portion 15a. In some embodiments, the barrier layer (not shown) is configured to prevent gas or fluid inside the first mold cavity 19a leaking out of the first mold cavity 19a.

The method M300 continues with operation O307. Operation O307 includes injecting a third polymeric material into the first mold cavity from the injecting unit to form an article including the first layer, the component and a third layer formed by the third polymeric material.

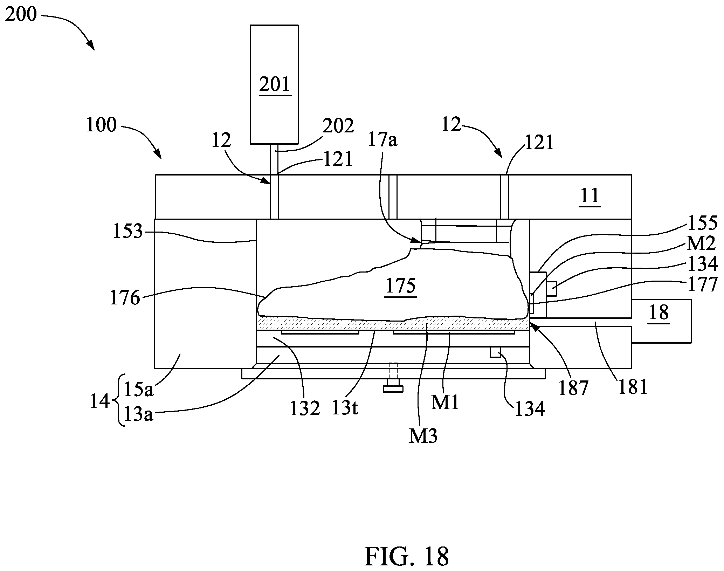

In some embodiments, referring to FIG. 18, a third polymeric material is injected into the first mold cavity 19a from the injecting unit to form an article 178 including the first layer M1, the second layer M2, the component 175 and a third layer M3 formed by the third polymeric material.

In some embodiments, the third polymeric material is injected from the mixing unit 201 and injection unit 202 into the molding device 100. In some embodiments, the third polymeric material is injected into the molding device 100 through the first mold 11.

In some embodiments, the third polymeric material is injected into the first mold cavity 19a through one of the feeding ports 12. In some embodiments, the third polymeric material includes TPU, PU, plastics or any other suitable materials. In some embodiments, the third polymeric material includes a physical blowing agent such as supercritical fluid. In some embodiments, the physical blowing agent is gaseous nitrogen, carbon dioxide, etc. In some embodiments, the third polymeric material is foamable or slightly foamable. In some embodiments, a composition of the third polymeric material is similar to or different from the composition of the first polymeric material or the composition of the second polymeric material.

In some embodiments, the third layer M3 attaches to the component 175, the first layer M1, and the second layer M2. In some embodiments, the third layer M3 is disposed over the first layer M1 and adjacent to the second layer M2, and the component 175 is disposed over the third layer M3. In some embodiments, the component 175, the first layer M1, the second layer M2 and the third layer M3 form the article 178. In some embodiments, the article 178 is a shoe. In some embodiments, a density of the third layer M3 is substantially less than a density of the first layer M1. In some embodiments, the density of the third layer M3 is substantially less than a density of the second layer M2.

In some embodiments, before the injection of the third polymeric material, a pressure in the first mold cavity 19a is sensed. In some embodiments, before the infection of the third polymeric material, a first gas (not shown) is injected into the first mold cavity 19a through the junction point 187 until the first mold cavity 19a is sensed to have a predetermined pressure.

In some embodiments, the method further includes sensing the pressure in the first mold cavity 19a and filling the third polymeric material from the feeding port 12 into the first mold cavity 19a having the predetermined pressure. In some embodiments, the method further includes discharging a portion of the first gas (not shown) from the first mold cavity 19a through the junction point 187.

In some embodiments, a first force is applied to the second mold 14 toward the first mold 11 to facilitate the engagement of the first mold 11 and the second mold 14 when the molding device 100 is in the closed configuration. In some embodiments, the first force is applied to the second mold 14 before the injection of the first gas into the first mold cavity 19a or before the injection of the third polymeric material into the first mold cavity 19a. In some embodiments, the first force is applied to the second mold 14 during the injection of the first gas into the first mold cavity 19a or during the injection of the third polymeric material into the first mold cavity 19a.

The method M300 continues with operation O308. Operation O308 includes removing the article from the molding device to obtain the article.

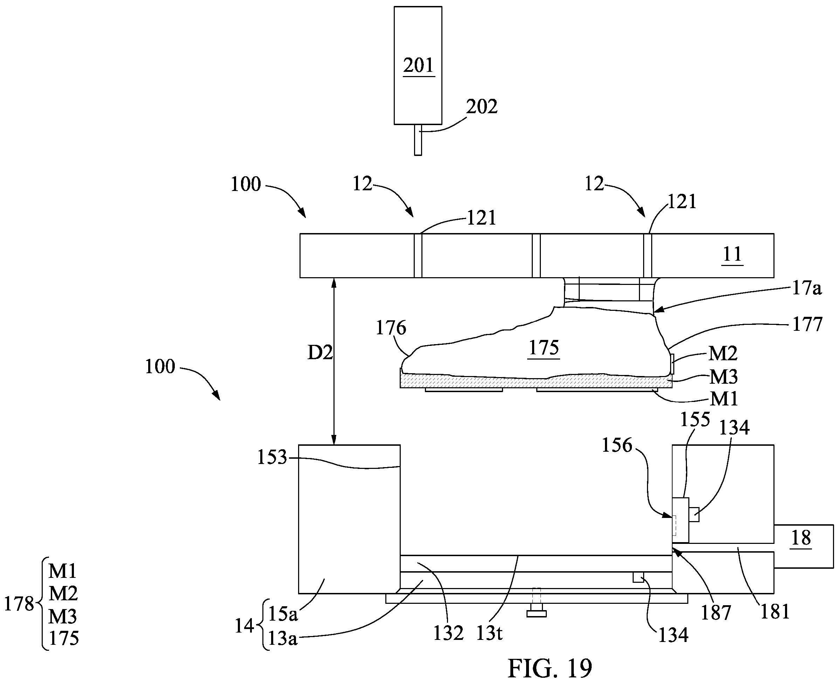

In some embodiments, the injection molding method M300 includes operation O308, which includes removing the article 178 from the molding device 100. In some embodiments, referring to FIG. 19, after the third layer M3 is formed within the molding device 100, the article 178 including the first layer M1, the second layer M2, the third layer M3 and the component 175 is removed from the first mold cavity 19a. In some embodiments, the molding device 100 is in an opened configuration while removing the article 178.

In some embodiments, after the article 178 is formed, the first mold 11 is disengaged from the second mold 14, so that the article 178 having the first layer M1, the second layer M2, the third layer M3 and the component 175 can be taken out from the second mold 14. In some embodiments, the article 178 having the first layer M1, the second layer M2, the third layer M3, the component 175 and the barrier layer can be taken out from the molding device 100.

In some embodiments, the first mold 11, the third mold 17a and the article 178 are moved away from the second mold 14. The second distance D2 after moving the first mold 11 and the third mold 17a away from the second mold 14 is greater than zero.

In some embodiments, before moving the first mold 11, the third mold 17a and the article 178 away from the second mold 14, the first portion 151 and the second portion 152 of the first peripheral portion 15a are moved away from each other to form the first gap G1 between the first portion 151 and the second portion 152 as shown in FIG. 2, and the article 178 thereby may be separated from the first peripheral portion 15a and be easily to remove from the first mold cavity 19a. In some embodiments, the molding device 100 transfers from the closed configuration to the opened configuration since the first gap G1 is generated.

In some embodiments, the injection molding method M300 further includes removing the article (not shown) formed within the second mold cavity 19b from the molding device 100. In some embodiments, the article 178 formed in the first mold cavity 19a and the article (not shown) formed in the second mold cavity 19b are obtain simultaneously. In some embodiments, after the article (not shown) is formed within the second mold cavity 19b, the first mold 11 is disengaged from the second peripheral portion 15b, so that the article (not shown) can be taken out from the second base portion 13b and the second peripheral portion 15b. In some embodiments, the first mold 11, the fifth mold 17b and the article (not shown) are moved away from the second base portion 13b and/or the second peripheral portion 15b.

In some embodiments, before moving the first mold 11, the fifth mold 17b and the article (not shown) away from the second base portion 13b and the second peripheral portion 15b, the third portion 153 and the fourth portion 154 of the second peripheral portion 15b are moved away from each other to form the second gap G2 between the third portion 153 and the fourth portion 154 as shown in FIG. 12, and the article (not shown) thereby may be separated from the second peripheral portion 15b and be easily to remove from the second mold cavity 19b. In some embodiments, the molding device 100 transfers from the closed configuration to the opened configuration since the second gap G2 is generated. In some embodiments, the molding device 100 transfers from the closed configuration to the opened configuration since the gap G2 is generated.

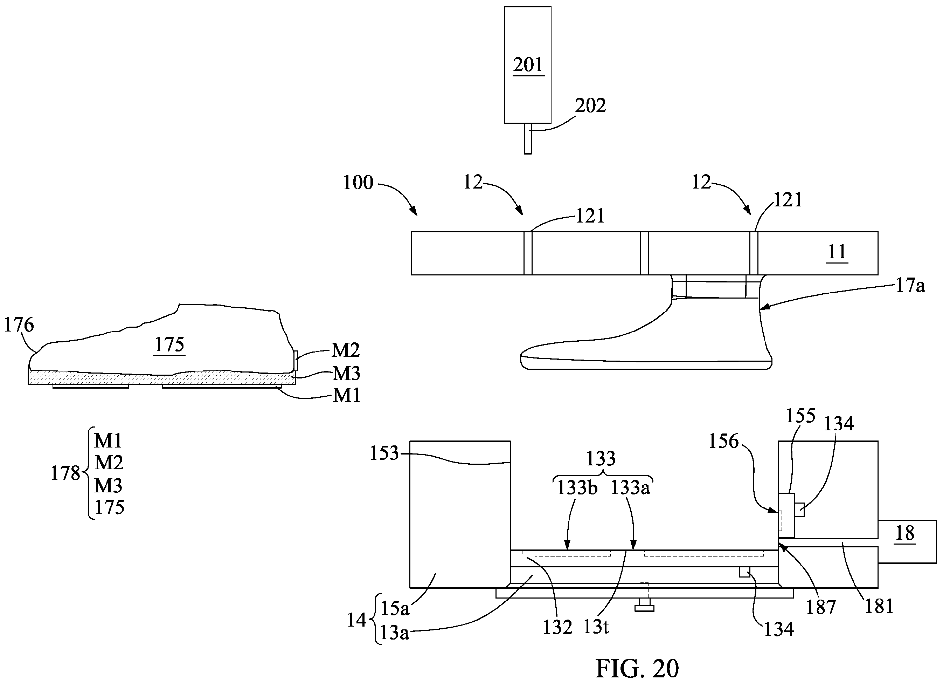

In some embodiments, referring to FIG. 20, the article 178 including the first layer M1, the third layer M3 and the component 175 is obtained from the molding device 100 after removing the article 178 from the molding device 100. In some embodiments, after the first mold 11, the third mold 17a and the article 178 are moved away from the second mold 14, and followed by removing the article 178 from the third mold 17a. In some embodiments, the article 178 having the first layer M1, the second layer M2, the third layer M3, the component 175 and the barrier layer are removed from the third mold 17a. In some embodiments, the article 178 is removed from the third mold 17a by human or a robot arm (not shown). In some embodiments, the first mold 11 and the third mold 17a are tilted before removing the article 178 from the third mold 17a.

In some embodiments, the article 178 includes the first layer M1, the third layer M3 and the component 175. In some embodiments, the article 178 further includes the second layer M2. In some embodiments, the barrier layer is removed from the article 178. The first layer M1 has a first density, and the third layer M3 has a third density. The first density and the third density may be same or different. In some embodiments, a first interface is between the first layer M1 and the third layer M3 has a first density gradient. The second layer M2 has a second density, and the second density and the third density may be same or different. In some embodiments, a second interface is between the second layer M2 and the third layer M3 has a second density gradient. The first density gradient and the second density gradient may be same or different.

The method M300 continues with operation O309. Operation O309 includes replacing the first carrier with a third carrier configured to have a fourth layer includes a fourth polymeric material disposed thereon after the article is formed.

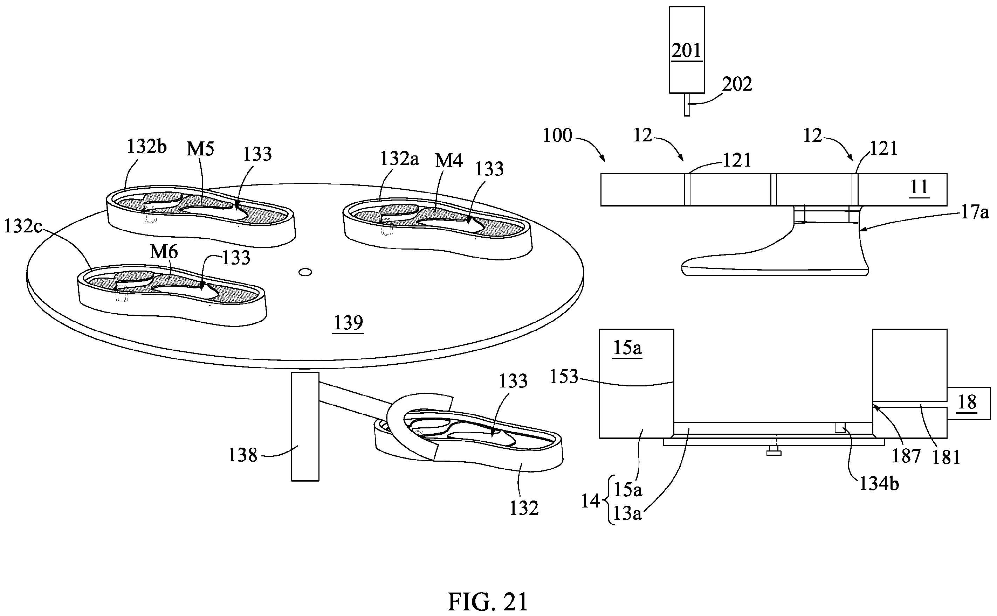

In some embodiments, referring to FIG. 21, the injection molding method M300 includes operation O309, which includes replacing the first carrier 132 with one of the carriers 132a, 132b, 132c. In some embodiments, the first carrier 132 engaged with the second mold 14 is replaced after the article 178 is formed, so another layer subsequently attached to the next article (not shown) can be placed in the first mold cavity 19a before injecting the third polymeric material again into the molding device100.

In some embodiments, the injection molding method M300 includes removing the first carrier 132 from the molding device 100 after the article 178 is formed. In some embodiments, the first carrier 132 is separated from the first base portion 13a and the first peripheral portion 15a by human or a robot arm 138. In some embodiments, the injection molding method M300 includes removing the second carrier 155 from the molding device 100 after the article 178 is formed. In some embodiments, the second carrier 155 is separated from the first base portion 13a and the first peripheral portion 15a by human or a robot arm 138. In some embodiments, the first carrier 132 and the second carrier 155 are removed from the molding device 100 separately or simultaneously.

In some embodiments, the injection molding system 200 further includes plurality of carriers 132a, 132b, 132c disposed adjacent to the molding device 100. In some embodiments, each of the carriers 132a, 132b, 132c has a layer M4, M5, M6 disposed thereon in advance, respectively. In some embodiments, the carriers 132a, 132b, 132c are arranged on a conveying bell or a turntable 139. The layers M4, M5, M6 are similar to the first layer M1 and configured to form a part of the article (not shown) made by the injection molding system 200, and each of the layers M4, M5, M6 is temporarily held by the corresponding carriers 132a, 132b, 132c. In some embodiments, the layers M4, M5, M6 are manufactured by 3D printing.

In some embodiments, the injection molding method M300 further includes disposing one of the carriers 132a, 132b, 132c and the corresponding layer M4, M5, M6 into the molding device 100. In some embodiments, one of the carriers 132a, 132b, 132c is moved from the conveying bell or the turntable 139 to dispose over the first base portion 13a by human or the robot arm 138, and the operations O303 to O308 shown in FIGS. 15 to 19 may be repeated, and therefore the method 300 can efficiently manufacture multiple articles, such as a plurality of articles 178.

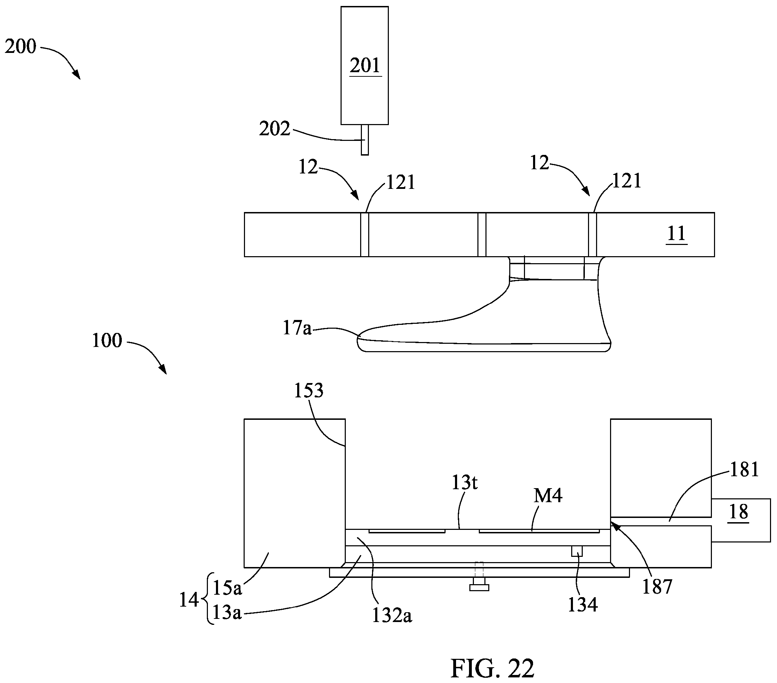

In some embodiments, referring to FIG. 22, the carrier 132a and the layer M4 hold by the carrier 132a are moved into the molding device 100, and the operations O303 to O308 shown in FIGS. 16 to 20 may be repeated. In some embodiments, the method M300 further includes engaging the carrier 132a to the first base portion 13a or the first peripheral portion 15a after the article 178 is removed from the molding device100, and the first mold 11 is engaged with the second mold 14 to form a third mold cavity 19c, wherein the carrier 132a and the layer M4 hold by the carrier 132a is disposed within the third mold cavity 19c. In some embodiments, the first base portion 13a is engaged with the carrier 132a, and the layer M4 is temporarily engaged with the first carrier 132a.

In some embodiments, the method M300 further includes engaging the carrier 132a and the second mold 14 by the locking device 134 between the carrier 132a and the second mold 14. In some embodiments, the locking device 134 is used to prevent movement of the carrier 132a during the injection of the fluid or the liquid into the molding device 100. In some embodiments, the locking device 134 between the carrier 132a and the second mold 14 temporarily engages the carrier 132a with the second mold 14. In some embodiments, the locking device 134 between the carrier 132a and the first base portion 13a temporarily engages the carrier 132a with the first base portion 13a. In some embodiments, the locking device 134 includes the first locking element 134a disposed on the carrier 132a and the second locking element 134b disposed on the second mold 14 and corresponding to the first locking element 134a.

According to the embodiments of the present disclosure, the first carrier 132 configured to hold the first layer M1 is disposed within the first mold cavity 19a and is attachable to and detachable from the first base portion 13a or the first peripheral portion 15a of the second mold 14. The first layer M1 is placed into the first mold cavity 19a before the injection of the third polymeric material. After the third polymeric material is injected from the injection unit 202 into the first mold cavity 19a and the third layer M3 is formed by the third polymeric material, the article 178 including the first layer M1 and the third layer M3 is obtained, and the first carrier 132 may be replaced by another carrier 132a configured to hold another layer M4. In some embodiments, the first layer M1 and the layer M4 have same or different patterns or configurations, and the pattern formed on the article 178 by the first layer M1 and the pattern formed on the article 178 by the layer M4 may be same or different.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein, may be utilized according to the present invention. Accordingly, the appended claims are intended to include within their scope such processes, machines, manufacture, compositions of matter, means, methods and steps.

## Claims

1. A molding device, comprising:
a first mold;
a second mold including a base portion and a peripheral portion disposed around or over the base portion;
a mold cavity defined by the first mold and the second mold; and
a first carrier disposed within the mold cavity and is attachable to and detachable from the base portion or the peripheral portion of the second mold.

2. The molding device of Claim 1, further comprising a first layer disposed within the mold cavity and held by the first carrier.

3. The molding device of Claim 2, wherein the first carrier includes a first recess and a second recess concaved from a top surface of the first carrier, a depth of the second recess is greater than a depth of the first recess.

4. The molding device of Claim 2 or 3, wherein the first layer is manufactured by 3D printing.

5. The molding device of any one of Claims 1 to 4, further comprising:
a locking device configured to temporarily engage the first carrier with the peripheral portion or the base portion of the second mold,
wherein the locking device is disposed between the first carrier and the second mold.

6. The molding device of any one of Claims 1 to 5, wherein the first carrier is attachable to and detachable from the base portion, and the peripheral portion includes a first portion and a second portion adjacent to and engageable with each other, and the base portion is disposed between the first portion and the second portion.

7. The molding device of any one of Claims 1 to 6, further comprising:
a second carrier disposed within the mold cavity and is attachable to and detachable from the peripheral portion,
wherein the first carrier is attachable to and detachable from the base portion, and the second carrier is configured to temporarily hold a second layer.

8. The molding device of Claim 7, wherein the second carrier includes a third recess and a fourth recess concaved from a top surface of the second carrier, and a depth of the fourth recess is greater than a depth of the third recess.

9. The molding device of any one of Claims 1 to 8, further comprising a third mold attached to the first mold, wherein the mold cavity is defined by the first mold, the second mold and the third mold when the first mold is disposed opposite to the second mold and the third mold is surrounded by the second mold.

10. A molding method, comprising:
providing a molding device including a first mold, a second mold having a base portion and a peripheral portion disposed around or over the base portion, and a third mold;
providing a first carrier attachable to and detachable from the base portion or the peripheral portion;
disposing a first layer on the first carrier, the first layer includes a first polymeric material;
engaging the first carrier with the second mold;
engaging the first mold with the second mold to form a first mold cavity, wherein the first carrier and the first layer hold by the first carrier are disposed within the first mold cavity;
injecting a second polymeric material from a injecting unit into the first mold cavity to form a second layer and an article including the first layer and the second layer from the second polymeric material; and
removing the article from the molding device.

11. The method of Claim 10, further comprising:
disposing a component on a third mold attached to the first mold before the first mold cavity is formed;
engaging the first mold with the second mold to form the first mold cavity and to enclose the third mold, wherein the first mold cavity is defined by the first mold, the second mold and the third mold;
obtaining an article including the first layer, the second layer and the component from the molding device,
wherein the second layer is formed between the component and the first layer.

12. The method of Claim 10 or 11, further comprising:
engaging the first carrier and the second mold by a locking device between the first carrier and the second mold.

13. The method of any one of Claims 10 to 12, further comprising:
attaching the first carrier having the first layer disposed thereon to the base portion or the peripheral portion before the formation of the first mold cavity.

14. The method of any one of Claims 10 to 13, further comprising:
providing a second carrier;
disposing a third layer on the second carrier, the third layer includes a third polymeric material;
attaching the first carrier having the first layer disposed thereon to the base portion before the formation of the first mold cavity;
attaching the second carrier having the third layer disposed thereon to the peripheral portion before the formation of the first mold cavity; and
injecting the second polymeric material from the injecting unit into the mold cavity to form the article including the first layer, the third layer and the second layer from the second polymeric material.

15. The method of any one of Claims 10 to 14, further comprising:
replacing the first carrier with a third carrier configured to have a fourth layer includes a fourth polymeric material disposed thereon after the article is formed;
engaging the third carrier to the base portion or the peripheral portion after the article is removed from the molding device; and
engaging the first mold with the second mold to form a second mold cavity, wherein the third carrier and the fourth layer hold by the third carrier is disposed within the second mold cavity.
